# EUROPEAN PATENT SPECIFICATION

(11) **EP 3 824 066 B1**
(45) Date of publication and mention of the grant of the patent: **01.11.2023**
(21) Application number: 19765554.1
(22) Date of filing: 05.07.2019
(51) Int. Cl.: C12G 1/032, C12H 1/07, B01D 65/08, B01D 29/00, C12G 1/02

(54) **METHOD AND APPARATUS FOR FERMENTATION**
VERFAHREN UND VORRICHTUNG ZUR FERMENTATION
PROCÉDÉ ET APPAREIL DE FERMENTATION

(30) Priority: 20.07.2018 IT 201800007405
(43) Date of publication of application: 26.05.2021
(73) Proprietor: Della Toffola S.p.A., 31040 Signoressa di Trevignano (TV) (IT)
(72) Inventor: DELLA TOFFOLA, Giacomo, 31044 Montebelluna (Treviso) (IT); DELLA TOFFOLA, Francesco, 31040 Trevignano di Signoressa (Treviso) (IT)
(74) Representative: Marri, Luca
(86) International application number: PCT/IB2019/055753
(87) International publication number: WO 2020/016695

(56) References cited:
- WO-A1-89/03240
- WO-A1-2017/191498
- DE-A1- 10 164 555
- FR-A1- 2 800 386
- US-A1- 2013 193 089

## Description

This invention concerns a method and an apparatus for the programmed control of a fermentation process, in particular fermentation for the production of wine or beer, and more specifically a method and an apparatus for the programmed control of the turbidity in the fermentation process.

In the continuation of this description, with the term "fermentation process" specific reference will be made to the vinification process by way of a non-limiting example.

Considering firstly the vinification of musts for white wine and rosé wine, as is known their turbidity is a factor of great importance which influences the fermentation process and ultimately the quality of the wine obtained. Moreover, this turbidity may be influenced by contingent factors: for example, if the must obtained from the pressing step remains even for a short period of time (about 24-48 hours) in a tank, part of the lees forms a sediment so that the turbidity values of both the must and the lees change.

In any case, in the traditional vinification process, the must obtained from the pressing of grapes, or in any case before fermentation, is subjected to a clarification step by means of filtration in order to eliminate undesirable components (such as the residue of treatments performed in the vineyard and/or microorganisms which may inhibit or damage the fermentation and compounds extracted from the skins).

Also in the case of the production of red wines, clarification of the must obtained from pressing (with or without subsequent storage in intermediate storage tanks) is performed.

In the case of the production of red wines, there is also the possibility of obtaining the must by means of a thermovinification process, where thermovinification is understood as meaning a technique used for the production of very coloured wines, suitable for blending (so-called dark red wines) in which the must is heated to temperatures of 65-95°C for a time ranging from 2 to 6 hours in order to increase the solubility of the colouring substances. Subsequently, the must is fermented in the same way as for white wine vinification.

Until now, modification of the clarified must with a view to subsequent fermentation has been carried out by the oenologist based on his/her sensitivity and experience, the main consequence of this being a not negligible variability and a consequent lack of reliability of the final result.

There therefore exists the need to ensure that implementation of the vinification process and in particular modification of the clarified must is no longer dependent on subjective and unregulated action.

As will appear more clearly from the description that follows, a first object of this invention is to provide a fermentation method, in particular a vinification method, comprising adjustment of the turbidity of the musts resulting from the clarification phase.

This method may also be advantageously used to regulate the turbidity of wine during maturation and of beer.

As is known, the clarification of grape must may be static or dynamic.

Static clarification normally takes place by means of natural sedimentation of the musts and/or by the addition of enzymes, an operation requiring from 12 to 24 hours and involving a racking operation which separates the clarified musts from the lees.

In a variant often used, the must is brought to a temperature of between 5 and 10°C, because in this way the beginning of fermentation of the must is blocked and the solid particles (lees) have time to settle.

According to a further variant, pectolytic enzymes (0.5 to 2 g/hl) are added to the must in order to improve and accelerate sedimentation. It is worth noting that pectolytic enzymes are already naturally present in grapes and their use is able to counterbalance the action of the pectins also present in the must, said pectins instead, owing to their gelling power, hindering sedimentation.

Dynamic clarification is carried out using various methods:
(i) centrifuging: in which the centrifugal force acting on the solid particles increases their separation;
(ii) filtration by means of vacuum rotary drum filter presses: in which the juice is entirely filtered, with the advantage of allowing a high degree of automation of the process and also clarification of musts from low-quality vintages, and with the disadvantage of very pronounced clarification, so that the resultant must has a very low turbidity and is also depleted in terms of indigenous yeasts, nutrients and aroma precursors;
(iii) flotation: in which the solid particles are brought to the surface by the action of microbubbles of gas, very often nitrogen, and by means of pressurization (at a pressure of between 5 and 7 bar) determined in a chamber located in the upper part of the floatation device. The injection of gas causes the formation of microbubbles which envelop the suspended solid particles and transport them to the surface of the liquid which must have a density greater than that of the microbubbles enveloping the solid particles;
(iv) tangential microfiltration: part of the flow of the liquid under filtration flows parallel to the surface of the filter (a porous membrane) so that it drags away the solid particles that would otherwise tend to clog the filter quickly, making frequent cleaning or replacement thereof necessary. The choice of porosity of the filtering membrane affects the result of the operation.

Each of these methods of grape must clarification has its drawbacks or disadvantages.

For example, in the case of the vacuum rotary drum filter press, the filtered musts generally have a very low turbidity (of the order of 8-20 NTU), so that they are depleted of indigenous yeasts, nutrients and aroma precursors, making it necessary to carry out subsequent enrichment operations (for example, with the addition of selected yeasts and food supplements). In addition, the filters used pose problems as regards their disposal after use. In the case of flotation, on the other hand, operational effectiveness is achieved by means of very precise and delicate technical operations and adjustments of the apparatus, so that ultimately this clarification method is very expensive and not suitable or profitable for existing production methods. Moreover, it is a process that is difficult to automate and requires preliminary tests to be carried out on the must in order to ascertain whether it is free of pollutants.

In the wine-making field, tangential microfiltration is a preferred technique for clarification because of a series of advantages it offers, including:
- it is stable and predictable, in the sense that the filtration results are known a priori and reproducible, particularly in terms of quality of the filtrate;
- there is both a reduction in water consumption and less need to replace the tangential filters;
- there are smaller losses of wine produced and the impact of filtration on the organoleptic characteristics of the wine produced is less;
- the filtering conditions avoid any denaturation of molecules present in the wine produced or in the must during vinification;
- the process is quick, can be automated and may operate continuously; and
- the microbiological stability is ensured and a substantial reduction of SO₂ is achieved. DE10164555 discloses a method of operating a cross-flow microfiltration installation for clarifying wine or beer. FR2800386 teaches a method for clarification of wine must by tangential filtration.

As previously mentioned, clarification is mainly used in the fermentation process, in particular in vinification, to clarify grape musts which have, however, different characteristics in the case of the production of white or rosé wines and in the case of the production of red wines.

A further differentiation between the various types of must is also obtained if the treated must comes directly from the press or is temporarily stored in temporary storage tanks (in this case temporary storage lasts about 24 - 48 hours). Another possibility is the treatment of the must obtained from a thermo vinification process.

For a better understanding of the invention, the following comments refer to clarification by means of tangential filtration, it being understood that, with appropriate modifications depending on the intrinsic characteristics of the filtration method, the same comments apply also to other filtration or clarification equipment and methods.
A) Degree of turbidity of musts of white or rosé wines:
   A1) must obtained directly from the press.

This must usually has a turbidity T, expressed in NTU, of 300 < T < 2000.

Clarification by means of tangential filtration produces a clear liquid which has a turbidity of T < 80 NTU and preferably T < 50 NTU.

A2) must obtained from a storage tank after pressing (average storage time of 48 hours).

In this case the must has already separated by means of sedimentation into a liquid phase, which has a turbidity T of about 40-50 NTU, and into a phase of solid consistency, i.e. lees, which has a turbidity of 1000 < T < 5000 NTU.

B) Degree of turbidity of red wine must:
B1) must obtained directly from the press.

This must usually has a turbidity of 400 < T < 9000 NTU. When performing clarification by means of tangential filtration, the turbidity is reduced to T < 20 NTU.

B2) must obtained from the storage tank after pressing

In this case the liquid phase of the must has a turbidity of 50 < T < 300 NTU, while the lees has a turbidity of 1500 < T < 12000 NTU. If the must is obtained from particularly ripe grapes, the turbidity does not drop much during storage in the tank and remains within the range of between 400 and 600 NTU.

B3) must from thermovinification.

In this case, the hot liquid phase of the must resulting from heat treatment is rich in solid components and often has a high degree of turbidity equal to 3000 NTU.

By performing clarification by means of tangential filtration, the turbidity is reduced to T < 20 NTU.

The main object of the present invention is to provide a fermentation method, in particular a vinification method, in which starting with a must resulting from clarification or from a wine already undergoing maturation it is possible to obtain in a controlled manner a wine having characteristics which are not only desirable and desired, but also predictable with a sufficient degree of certainty a priori.

A further object is to provide a fermentation method, in particular a method for clarification of beer must in a controlled manner so as to produce a beer with the desired organoleptic and taste characteristics.

A specific object of the present invention is to provide a fermentation method, in particular a vinification method, in which the grape must resulting from a tangential filtration is modified depending on the desired characteristics of the wine to be obtained, such that the method is no longer dependent on subjective and non-standardized action of the oenologist.

Another object of the present invention is to provide an apparatus for the programmed control of the turbidity of a liquid in a fermentation process, in particular a vinification process, in particular an apparatus for the treatment of must resulting from clarification, such as to allow the industrial implementation of the method according to the present invention.

A further object of the present invention is to provide an apparatus for the programmed control of the turbidity of a liquid in a fermentation process, in particular vinification process, in particular an apparatus for the treatment of wine undergoing maturation, in order to improve the organoleptic properties of said wine.

Finally, an object of the present invention is to provide an apparatus for the programmed control of the turbidity of a liquid in a fermentation process in order to optimize the method of clarification of beer musts.

These and other objects of the present invention are achieved with a fermentation method, in particular vinification method of the type in which a liquid, in particular must obtained from the press, directly or after a storage in a temporary storage tank, is subjected to clarification, in particular tangential filtration, so as to determine pre-established turbidity values in the filtered must, said method being characterized in that the must obtained from the clarification phase, in particular from tangential filtration, with a turbidity of less than 80 NTU, preferably less than 50 NTU, has, added thereto, a quantity of the same must which has not been clarified, i.e. prior to the clarification phase, until a predetermined turbidity value depending on the desired quality of the wine is obtained.

More specifically, in the case of vinification to obtain white wine or rosé wine, the addition of must which has not been clarified is such as to adjust the turbidity of the clarified must to a turbidity value of between 50 and 250 NTU, preferably between 80 and 230 NTU.

In the case, instead, of vinification to obtain red wine, the addition of must which has not been clarified is such as to adjust the turbidity of the clarified must to a value T of between 50 and 600 NTU, preferably between 300 and 500 NTU.

In the case, instead, of thermovinification for the production of dark red wine, two options are possible:
- in the first case, the addition of unclarified must is such as to adjust the turbidity of the clarified must to a value T not exceeding 150 NTU, preferably of about 50 NTU;
- in the second case, the addition of unclarified must is such as to adjust the turbidity of the clarified must to a value T of between 300 and 400 NTU.

The turbidity values indicated above may require modification depending on a particular parameter, i.e. the state of health of the harvest.

In fact, the riper and healthier the harvested grapes and the less the presence of plant protection products, the higher will be the degree of turbidity of the musts which must be fermented without the risk of modification of the aromas.

On the other hand, when the harvested grapes are not sufficiently ripe, not perfectly healthy and have residue from plant protection products, the optimum degree of turbidity for the present invention must be suitably lowered.

From the above it is clear that the principle on which the present invention is based is a two-stage method.

During the first stage the must from the press is subjected to clarification, in particular to tangential filtration, in order to remove components forming lees which may be a source of problems and drawbacks during the subsequent fermentation and obtain a clear must with a very low turbidity, of less than 80 NTU, preferably less than 50 NTU.

During the second stage, a quantity of the unclarified must is added to the same filtered must so as to adjust the turbidity of the must to be transferred for alcoholic fermentation to a predetermined value consistent with the quality of the wine to be obtained.

In summary and in general terms the method according to the present invention consists in:
1. feeding the must to be clarified to a tangential microfiltration filter;
2. setting the degree of turbidity required in the final product;
3. mixing the resulting filtrate with must to be clarified until the desired degree of turbidity is reached; and
4. determining the turbidity of the resulting mixture and, in case of a degree of turbidity different from that which has been set, modifying the amount to be added to the must filtrate to be clarified.

Preferably, the method according to the present invention envisages, in addition to the previously defined steps, the step of preliminary analysis of the must to be clarified in order to determine its degree of turbidity (expressed in NTU or other units of measurement) corresponding to a given content of solid particles or lees.

In turn, the apparatus for the programmed control of the turbidity of a liquid according to the present invention is provided with, depending on the configuration, an inlet duct for feeding must to be clarified, a tangential microfiltration filter fed by said inlet duct with must to be clarified, the turbidity of which has been preferably determined beforehand, said filter having an outlet duct for filtered must, a separate circuit, connected to said inlet duct and bypassing said filter, comprising a metering pump, said separate circuit being connected to said outlet duct by said filter, a mixer inserted in the circuit downstream of said connection of said separate circuit to said outlet duct of said filter, a turbidimeter located downstream of said mixer and a control device connected upstream to said turbidimeter and downstream to said pump of said separate circuit for managing and controlling the addition of said must to be clarified to said outlet duct of said filter.

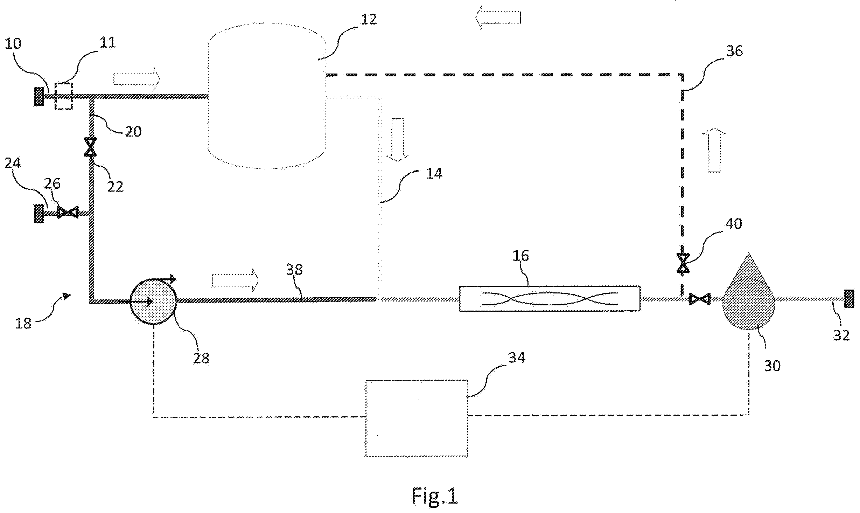

According to another aspect of the present invention, the method concerns instead the processing of the product resulting from vinification, particularly in the case of red wines, in order to improve significantly their organoleptic characteristics and therefore their quality. More specifically, the filtration or clarification operation may also be performed during another stage of the vinification process, namely on wine undergoing maturation, a stage which may envisage:
(a) filtration without completely removing the suspended solid floating parts; and
(b) the controlled re-introduction of lees obtained from the same wine or from a different wine of superior quality in order to improve the quality of the wine undergoing maturation. The apparatus defined above is schematically illustrated in the attached drawing where the reference number 10 indicates the inlet duct for the liquid, in particular must to be treated, and 12 indicates the tangential microfiltration filter, having an outlet duct 14 connected to the inlet of a liquid mixer 16.

A separate circuit, indicated generically and overall by the reference number 18, is connected upstream (reference number 20) to the inlet duct 10 for the must to be treated under the control of a shut-off valve 22 and bypasses the filter 12.

The circuit 18 has, inserted in it, a metering pump 28, the inlet of which may be supplied either with must from the connection 20 or, as subsequently explained, with a separate supply of an additional liquid from a second inlet duct 24 controlled by a shut-off valve 26.

The delivery 38 of the pump 28 is connected to the inlet of mixer 16, the outlet of which is connected to a turbidimeter 30 in turn connected to an outlet duct 32 for the final product and to a control unit 34, the outlet of which controls the pump 28.

A branched duct 36, controlled by a shut-off valve 40, allows the outlet of the mixer 16 to be connected to the filter 12.

To implement the method of the present invention, the must is fed through the inlet duct 10 and loaded into the tangential filter 12. At the same time via the delivery 38, the pump 28 feeds to the mixer 16 unclarified must, taken from the same inlet duct 10, in the quantity presumably required to set the degree of turbidity of the must output from the filter 12 to the desired level.

The actual degree of turbidity of the must resulting from the mixer 16 is measured by the turbidimeter 30 and, if it does not correspond to the pre-set level, all the liquid output from the mixer 16 is conveyed back to the filter 12 via the duct 36.

If, as envisaged by the method of the present invention, the degree of turbidity of the must to be treated is determined initially, i.e. before starting the filtration in the filter 12, then it is possible to control, without proceeding by trial and error, the quantity of must to be treated which via the separate circuit 18 and the pump 28 is mixed with the filtered must leaving the filter 12.

As indicated above, according to a variant of the method of the present invention, instead of the must obtained from pressing (with or without storage in a temporary storage tank), via the inlet 10 a wine undergoing maturation is fed to the filter 12, said wine having therefore already started and/or completed the step of fermentation and transformation of the starting must.

In this case it is possible to supply via the inlet duct 24 the lees of a different wine with different desired qualities to be given to the wine that otherwise would be obtained.

In this way it is possible to improve the quality of the wine or to give it particular organoleptic characteristics.

Some examples of application of the present invention are now provided purely by way of a non-limiting illustration, the term "example" in this case meaning the reference to a particular grape type and the indication of the specific turbidity values associated with it.

It should be noted that the adjustment to the degrees of turbidity T identified above does not require a strict correspondence in the sense that, if the turbidity T must be adjusted to T = 110 NTU, this will be the average value of the turbidity of the must output by the outlet duct 32 of the apparatus.

### Example 1)

Controlled treatment of grape must from Chardonnay vine stock.

The pressing in this case provides a must with an average turbidity of about 700 NTU.

This type of grape variety is usually subjected to static clarification so that, to obtain a good result and therefore a wine of suitable quality, it is necessary to add enzymes.

Using the method of the present invention, the degree of turbidity to be pre-set is 50-125 NTU, which is therefore the degree of turbidity which the must output by the outlet duct 32 of the apparatus must have.

In particular, operating at a degree of turbidity set to 50-70 NTU, it is possible to obtain a slightly bitter and slightly astringent wine with fruity aromas such as banana, pear, peach and lemon.

If, on the other hand, the degree of turbidity of the treated must is set to 110 NTU, then a wine with a more floral aroma (acacia, hawthorn) is obtained, while increasing the degree of turbidity to 250 NTU produces a wine with spicy aromas such as nutmeg.

If this limit is exceeded, the resultant wine has herbaceous flavours.

### Example 2)

Controlled treatment of grape must from Sauvignon Blanc vine stock.

This grape variety differs from other grape varieties in that it contains non-volatile precursors containing sulphur.

It is known that there is a correlation between the turbidity value of the must used for vinification and the sulphur compounds which may be perceived in the wine, in the form of an aroma and/or taste which is sometimes unpleasant, such as that of rotten eggs produced by hydrogen sulphide (H2S), or that of cooked cabbage produced by methionol.

It is known that the fermentation of a clarified must up to 150-200 NTU favours the release of thiol compounds, said release increasing up to 40% if the turbidity is increased to 300 NTU, so that much attention is needed.

Applying the method of the present invention with a degree of turbidity set to a value of between 150 and 220 NTU, a wine with a desirable amount of fruity overtones (melon, apricot, green apple and pear) is obtained without releasing unpleasant aromas (such as green pepper and cat's urine) that are present intrinsically in the grape variety and which develop if the turbidity of the must is increased too much.

### Example 3)

Controlled treatment of grape must from Syrah vine stock.

Considering the rosé vinification of this grape variety, the qualities of wines obtainable at different degrees of turbidity are very different.

For example, the fermentation of a clarified must, the turbidity of which is controlled to a value of between 20 and 100 NTU, allows floral and fruity aromas to be highlighted and intensified, while if the degree of turbidity is increased to values of between 250 and 500 NTU spicy, vegetable and animal aromas become more prominent.

### Example 4)

Treatment of controlled "red" grape must undergoing a thermovinification process. Thermovinification of Merlot type grapes is considered.

The thermovinification process in this case provides a must with an average turbidity of about 3000 NTU.

By applying the technique of tangential filtration to the must which is still hot (or lukewarm), it is possible to lower the degree of turbidity to a value of 50 NTU.

At this point, by increasing the turbidity in a controlled manner according to the teachings of the present invention up to a maximum of 150 NTU, wines with more amyl-derived caramel and banana aromas are obtained, as occurs in the case of new wines.

Alternatively, by increasing the turbidity in a controlled manner to a value of between 300 and 400 NTU, wines which favour fatty acids and therefore have aromas tending towards a syrupy fruit aroma are obtained.

### Example 5)

Treatment of Cabernet Sauvignon wine undergoing maturation.

In this case, the Cabernet Sauvignon wine is filtered with a tangential filter so that it is separated from the lees which could cause an alteration of the taste due to the presence of yeasts.

The wine is then clarified and the degree of turbidity is lowered to a value of between 5 and 50 NTU to remove those particles which over time can lead to the formation of an unpleasant (e.g. mould-like) taste. In this way, all the aroma precursors present are removed and a neutral clarified wine is obtained.

Subsequently, the degree of turbidity of the neutral clarified wine is increased owing to the addition of high quality lees, for example from the same type of wine (Cabernet Sauvignon) with a turbidity value T of between 1000 and 4000 NTU. The addition of a minimum quantity of lees improves the quality of the wine.

The final blend of neutral clarified wine and lees obtained has a degree of turbidity T of between 10 and 50 NTU. This particular turbidity value gives the wine particular aromatic qualities. In particular, the wine is more full-bodied, has more volume and has a greasier taste. The liquid to be clarified may also be beer, and therefore the method and the apparatus of the present invention can be used also in the production of beer, more specifically so-called artisanal beer, which also in this case involves the alcoholic fermentation of a must.

As is known, in this type of beer there are lees resulting from the presence of residues rich in yeasts and compounds which, while on the one hand enriching the organoleptic characteristics of the beer, on the other hand may give rise to certain drawbacks.

Currently, in artisanal breweries, the sedimentation time is used to control the level of lees, but clarification by means of sedimentation is a long and costly operation (since it lasts several weeks, with the liquid being kept at a maximum temperature of 1°C).

Moreover, this operation is also affected by factors such as lunar magnetism and variations in atmospheric pressure.

### Example 6)

Treatment of IPA type beer (India Pale Ale)

Using the present invention, the sedimentation is replaced by dynamic clarification, in particular tangential filtration, so as to bring the beer to a very low degree of turbidity, and then adjusting the turbidity to the desired and desirable value by reintroducing unclarified beer.

It has been found that in this way the maceration time is greatly reduced, i.e. to the minimum needed to give the beer the desired organoleptic and taste characteristics.

## Claims

1. Fermentation method, of the type wherein a liquid comprising a liquid phase and solid particles undergoes a fermentation process comprising a clarification phase, **characterized by** the steps of:
(a) feeding the liquid to be clarified to a tangential microfiltration filter;
(b) setting the degree of turbidity required in the final product;
(c) mixing the resulting filtrate with liquid to be clarified until a desired degree of turbidity is reached.

2. Method according to claim 1, **characterized by** the further step of determining the turbidity of the resulting mixture and in the case of a degree of turbidity different from that which has been set, modifying the amount of the liquid to be clarified which is added to the filtrate.

3. Method according to claim 1, **characterized in that** the turbidity of the liquid to be clarified is measured before feeding to said filter.

4. Method according to claim 1, **characterized in that** said fermentation method is a vinification process and said liquid to be clarified is must obtained from the pressing of grapes.

5. Method according to claim 4, **characterized in that** the must obtained from the clarification phase, in particular from tangential filtration, having a turbidity lower than 80 NTU, preferably lower than 50 NTU, has, added thereto, an amount of the same must which has not been clarified, i.e. prior to the clarification phase, until a desired turbidity value depending on the desired quality of the wine is obtained.

6. Method according to claim 5, **characterized in that**, in the case of vinification to obtain white or rosé wine, the addition of must which has not been clarified is such as to adjust the turbidity of the clarified must to a turbidity value of between 50 and 250 NTU, preferably between 80 and 230 NTU.

7. Method according to claim 5, **characterized in that**, in the case of vinification to obtain red wine, the addition of must which has not been clarified is such as to adjust the turbidity of the clarified must to a turbidity value T of between 50 and 600 NTU, preferably between 300 and 500 NTU.

8. Method according to claim 5, **characterized in that** in the white wine or rosé wine vinification process the must from a temporary storage tank has already been separated by means of sedimentation into a liquid phase, which has a turbidity T of about 40-50 NTU, and into a phase with a solid consistency, i.e. lees, which has a turbidity of 1000 < T < 5000 NTU.

9. Method according to claim 5, **characterized in that** in the red vinification process the must from a temporary storage tank has already been separated by means of sedimentation into a liquid phase having a turbidity of 50 < T < 600 NTU, whereas the lees has a turbidity of 1500 < T < 12000 NTU.

10. Method according to claim 1, **characterized in that** said fermentation method is a vinification process and the filtration process is carried out on a wine which is undergoing maturation, said method comprising:
a) a filtration without completely removing the suspended solid floating parts and
b) the controlled reintroduction of lees obtained from the same wine or from a different wine of superior quality in order to improve the quality of the wine which is undergoing maturation.

11. Method according to claim 1, **characterized in that** the liquid to be clarified is beer.

12. Apparatus for the programmed control of the turbidity of a liquid comprising a liquid phase and solid particles in a fermentation process according to the method of claim 1, **characterized in that** it is provided with an inlet duct (10) for the liquid to be clarified, a tangential microfiltration filter (12) fed with said liquid to be clarified, the turbidity of which has been preferably measured beforehand, a separate circuit (18), connected to said inlet duct (10) and bypassing said filter (12), comprising a metering pump (28), said separate circuit (18) being connected to an outlet duct (14) of said filter (12), a mixer (16) positioned in the circuit downstream of said connection of said separate circuit (18) to said outlet duct (14) of said filter (12), a turbidimeter (30) connected to an outlet duct (32) for the final product, said turbidimeter (30) being placed downstream of said mixer (16) and a control device (34) connected upstream to said turbidimeter (30) and downstream to said pump (28) of said separate circuit (18) for managing and controlling the addition of said liquid to be clarified to said outlet duct (17) of said filter (12).

13. Apparatus according to claim 12, **characterized in that** upstream of said filter (12) a first turbidimeter (11) is provided for the preliminary determination of the turbidity of the liquid to be clarified.

14. Apparatus according to claim 12, **characterized in that** the metering pump (28) is fed with the liquid to be clarified from the first inlet (10) or with additional liquid from a second inlet (24).

## Patentansprüche

1. Fermentationsverfahren des Typs, bei dem eine Flüssigkeit, die eine flüssige Phase und feste Teilchen umfasst, einem Fermentationsprozess unterzogen wird, der eine Klärungsphase umfasst, **gekennzeichnet durch** die Schritte des:
(a) Zuführens der zu klärenden Flüssigkeit an einen tangentialen Mikrofiltrationsfilter;
(b) Einstellens des für das Endprodukt erforderlichen Trübungsgrades;
(c) Mischens des resultierenden Filtrats mit der zu klärenden Flüssigkeit, bis ein gewünschter Trübungsgrad erreicht ist.

2. Verfahren nach Anspruch 1, **gekennzeichnet durch** den weiteren Schritt des Bestimmens der Trübung des resultierenden Gemisches und im Falle eines Trübungsgrades, der von dem eingestellten abweicht, des Modifizierens der Menge der zu klärenden Flüssigkeit, die dem Filtrat zugesetzt wird.

3. Verfahren nach Anspruch 1, **dadurch gekennzeichnet, dass** die Trübung der zu klärenden Flüssigkeit vor der Zuführung zu dem Filter gemessen wird.

4. Verfahren nach Anspruch 1, **dadurch gekennzeichnet, dass** das Fermentationsverfahren ein Weinherstellungsverfahren ist und die zu klärende Flüssigkeit Most ist, der beim Pressen von Trauben erhalten wird.

5. Verfahren nach Anspruch 4, **dadurch gekennzeichnet, dass** dem aus der Klärungsphase, insbesondere aus der Tangentialfiltration, erhaltenen Most, der eine Trübung von weniger als 80 NTU, vorzugsweise weniger als 50 NTU, aufweist, eine Menge desselben Mosts zugesetzt wird, der nicht geklärt wurde, d.h. vor der Klärungsphase, bis ein gewünschter Trübungswert in Abhängigkeit von der gewünschten Weinqualität erhalten wird.

6. Verfahren nach Anspruch 5, **dadurch gekennzeichnet, dass** im Falle der Weinherstellung, um Weiß- oder Roséwein zu erhalten, die Zugabe von nicht geklärtem Most so erfolgt, dass die Trübung des geklärten Mosts auf einen Trübungswert zwischen 50 und 250 NTU, vorzugsweise zwischen 80 und 230 NTU, eingestellt wird.

7. Verfahren nach Anspruch 5, **dadurch gekennzeichnet, dass** im Falle der Weinherstellung, um Rotwein zu erhalten, die Zugabe von nicht geklärtem Most so erfolgt, dass die Trübung des geklärten Mosts auf einen Trübungswert T zwischen 50 und 600 NTU, vorzugsweise zwischen 300 und 500 NTU, eingestellt wird.

8. Verfahren nach Anspruch 5, **dadurch gekennzeichnet, dass** bei der Weinherstellung von Weißwein oder Roséwein der Most aus einem Zwischenlagertank bereits durch Sedimentation in eine flüssige Phase, die eine Trübung T von etwa 40-50 NTU aufweist, und in eine Phase mit fester Konsistenz, d.h. Trub, der eine Trübung von 1000 < T < 5000 NTU aufweist, getrennt wurde.

9. Verfahren nach Anspruch 5, **dadurch gekennzeichnet, dass** bei der Herstellung von Rotwein der Most aus einem Zwischenlagertank bereits durch Sedimentation in eine flüssige Phase mit einer Trübung von 50 < T < 600 NTU getrennt worden ist, wohingegen der Trub eine Trübung von 1500 < T < 12000 NTU aufweist.

10. Verfahren nach Anspruch 1, **dadurch gekennzeichnet, dass** es sich bei dem Gärungsverfahren um ein Weinherstellungsverfahren handelt und das Filtrationsverfahren an einem Wein durchgeführt wird, der sich in der Reifung befindet, wobei das Verfahren umfasst:
(a) eine Filtration ohne vollständige Entfernung der suspendierten, festen, flotierenden Teile und
(b) die kontrollierte Wiedereinführung von Trub, der aus demselben Wein oder aus einem anderen Wein höherer Qualität erhalten wurde, um die Qualität des Weins, der sich in der Reifung befindet, zu verbessern.

11. Verfahren nach Anspruch 1, **dadurch gekennzeichnet, dass** die zu klärende Flüssigkeit Bier ist.

12. Vorrichtung zur programmierten Kontrolle der Trübung einer Flüssigkeit, die eine flüssige Phase und feste Partikel in einem Gärungsprozess umfasst, nach dem Verfahren des Anspruchs 1, **dadurch gekennzeichnet, dass** sie mit einer Einlassleitung (10) für die zu klärende Flüssigkeit versehen ist, einem tangentialen Mikrofiltrationsfilter (12), der mit der zu klärenden Flüssigkeit gespeist wird, dessen Trübung vorzugsweise vorher gemessen wurde, einen separaten Kreislauf (18), der mit der Einlassleitung (10) verbunden ist und den Filter (12) umgeht umfassend eine Dosierungspumpe (28), wobei der separate Kreislauf (18) mit einer Auslassleitung (14) des Filters (12) verbunden ist, einen Mischer (16), der in dem Kreislauf stromabwärts von der Verbindung des getrennten Kreislaufs (18) mit der Auslassleitung (14) des Filters (12) angeordnet ist, ein Trübungsmessgerät (30), das mit einer Auslassleitung (32) für das Endprodukt verbunden ist, wobei das Trübungsmessgerät (30) stromabwärts des Mischers (16) angeordnet ist und eine Steuervorrichtung (34) stromaufwärts des Trübungsmessgeräts (30) und stromabwärts der Pumpe (28) des getrennten Kreislaufs (18) angeschlossen ist, um die Zugabe der zu klärenden Flüssigkeit in die Ausgangsleitung (17) des Filters (12) zu steuern und zu kontrollieren.

13. Vorrichtung nach Anspruch 12, **dadurch gekennzeichnet, dass** stromaufwärts des Filters (12) ein erstes Trübungsmessgerät (11) für die vorläufige Bestimmung der Trübung der zu klärenden Flüssigkeit vorgesehen ist.

14. Vorrichtung nach Anspruch 12, **dadurch gekennzeichnet, dass** die Dosierpumpe (28) mit der zu klärenden Flüssigkeit aus dem ersten Zulauf (10) oder mit zusätzlicher Flüssigkeit aus einem zweiten Zulauf (24) gespeist wird.

## Revendications

1. Procédé de fermentation, du type dans lequel un liquide comprenant une phase liquide et des particules solides subit un procédé de fermentation comprenant une phase de clarification, **caractérisé par** les étapes de:
(a) introduction du liquide devant être soumis à une clarification dans un filtre à microfiltration tangentielle;
(b) réglage du degré de turbidité requis dans le produit final;
(c) mélange du filtrat résultant avec le liquide devant être soumis à une clarification jusqu'à ce qu'un degré de turbidité souhaité soit atteint.

2. Procédé selon la revendication 1, **caractérisé par** l'étape supplémentaire de détermination de la turbidité du mélange résultant et dans le cas d'un degré de turbidité différent de celui qui a été réglé, modification de la quantité du liquide devant être soumis à une clarification qui est ajoutée au filtrat.

3. Procédé selon la revendication 1, **caractérisé en ce que** la turbidité du liquide devant être soumis à une clarification est mesurée avant introduction dans ledit filtre.

4. Procédé selon la revendication 1, **caractérisé en ce que** ledit procédé de fermentation est un procédé de vinification et ledit liquide devant être soumis à une clarification est le moût obtenu à partir du pressage de raisins.

5. Procédé selon la revendication 4, **caractérisé en ce que** le moût obtenu à partir de la phase de clarification, en particulier à partir de la filtration tangentielle, ayant une turbidité inférieure à 80 NTU, de préférence inférieure à 50 NTU, a, ajoutée à celui-ci, une quantité du même moût qui n'a pas été soumis à une clarification, à savoir avant la phase de clarification, jusqu'à ce qu'une valeur de turbidité souhaitée dépendant de la qualité souhaitée du vin soit obtenue.

6. Procédé selon la revendication 5, **caractérisé en ce que**, dans le cas d'une vinification pour obtenir du vin blanc ou rosé, l'ajout de moût qui n'a pas été soumis à une clarification est de manière à ajuster la turbidité du moût soumis à une clarification à une valeur de turbidité entre 50 et 250 NTU, de préférence entre 80 et 230 NTU.

7. Procédé selon la revendication 5, **caractérisé en ce que**, dans le cas d'une vinification pour obtenir du vin rouge, l'ajout de moût qui n'a pas été soumis à une clarification est de manière à ajuster la turbidité du moût soumis à une clarification à une valeur de turbidité T entre 50 et 600 NTU, de préférence entre 300 et 500 NTU.

8. Procédé selon la revendication 5, **caractérisé en ce que** dans le procédé de vinification de vin blanc ou de vin rosé, le moût provenant d'une cuve de stockage temporaire a déjà été séparé au moyen d'une sédimentation en une phase liquide, qui a une turbidité T d'environ 40 à 50 NTU, et en une phase ayant une consistance solide, à savoir de la lie, qui a une turbidité de 1 000 < T < 5 000 NTU.

9. Procédé selon la revendication 5, **caractérisé en ce que** dans le procédé de vinification de vin rouge, le moût provenant d'une cuve de stockage temporaire a déjà été séparé au moyen d'une sédimentation en une phase liquide ayant une turbidité de 50 < T < 600 NTU, tandis que la lie a une turbidité de 1 500 < T < 12 000 NTU.

10. Procédé selon la revendication 1, **caractérisé en ce que** ledit procédé de fermentation est un procédé de vinification et le procédé de filtration est réalisé sur un vin qui est en cours de maturation, ledit procédé comprenant:
a) une filtration sans élimination complète des parties flottantes solides en suspension et
b) la réintroduction contrôlée de la lie obtenue à partir du même vin ou d'un vin différent de qualité supérieure afin d'améliorer la qualité du vin qui est en cours de maturation.

11. Procédé selon la revendication 1, **caractérisé en ce que** le liquide devant être soumis à une clarification est de la bière.

12. Appareil pour le contrôle programmé de la turbidité d'un liquide comprenant une phase liquide et des particules solides dans un procédé de fermentation selon le procédé selon la revendication 1, **caractérisé en ce qu'**il est doté d'un conduit d'entrée (10) pour le liquide devant être soumis à une clarification, d'un filtre à microfiltration tangentielle (12) recevant ledit liquide devant être soumis à une clarification, dont la turbidité a été de préférence mesurée à l'avance, d'un circuit (18) séparé, raccordé audit conduit d'entrée (10) et contournant ledit filtre (12), comprenant une pompe doseuse (28), ledit circuit (18) séparé étant raccordé à un conduit de sortie (14) dudit filtre (12), d'un mélangeur (16) positionné dans le circuit en aval dudit raccordement dudit circuit (18) séparé audit conduit de sortie (14) dudit filtre (12), d'un turbidimètre (30) raccordé à un conduit de sortie (32) pour le produit final, ledit turbidimètre (30) étant placé en aval dudit mélangeur (16) et d'un dispositif de contrôle (34) raccordé en amont dudit turbidimètre (30) et en aval de ladite pompe (28) dudit circuit (18) séparé pour gérer et contrôler l'ajout dudit liquide devant être soumis à une clarification audit conduit de sortie (17) dudit filtre (12).

13. Appareil selon la revendication 12, **caractérisé en ce qu'**en amont dudit filtre (12), un premier turbidimètre (11) est fourni pour la détermination préliminaire de la turbidité du liquide devant être soumis à une clarification.

14. Appareil selon la revendication 12, **caractérisé en ce que** la pompe doseuse (28) reçoit le liquide devant être soumis à une clarification en provenance de la première entrée (10) ou un liquide additionnel en provenance d'une seconde entrée (24).
